# EUROPEAN PATENT SPECIFICATION

(11) **EP 2 614 261 B1**
(45) Date of publication and mention of the grant of the patent: **25.03.2015**
(21) Application number: 10760247.6
(22) Date of filing: 08.09.2010
(51) Int. Cl.: F15B 15/14, F16H 61/30

(54) **SERVO ASSISTED ACTUATING SYSTEM FOR A MULTISPEED GEARBOX OF A VEHICLE**
SERVOGESTÜTZTES BETÄTIGUNGSSYSTEM FÜR EIN FAHRZEUGGETRIEBE MIT MEHREREN GESCHWINDIGKEITEN
SYSTÈME D'ACTIONNEMENT SERVO-ASSISTÉ POUR BOÎTE DE VITESSE À RAPPORTS MULTIPLES D'UN VÉHICULE

(43) Date of publication of application: 17.07.2013
(73) Proprietor: Kongsberg Automotive As, 3601 Kongsberg (NO)
(72) Inventor: MÜLLER, Bert, 40882 Ratingen (DE)
(74) Representative: UEXKÜLL & STOLBERG
(86) International application number: PCT/EP2010/005494
(87) International publication number: WO 2012/031611

(56) References cited:
- DE-A1- 3 214 776
- DE-B- 2 600 483
- JP-A- 8 184 371
- JP-A- 2000 230 636
- US-A- 2 763 159

## Description

The present invention relates to a servo assisted actuating system for a multispeed gearbox of a vehicle, comprising a cable connection including a cable, a servo cylinder, a piston slideably disposed in the interior of the servo cylinder and dividing the interior into an inner and an outer chamber, a piston rod fixedly connected to the piston and extending through the outer chamber and to the exterior of the servo cylinder, and a control valve to be connected to a pressure fluid source, one end of the cable being connectable to a gear lever and the other end being connected to the control valve to control it to selectively supply pressurized fluid to the the servo cylinder, the piston rod being provided with first mounting means adapted to be mountable to a fixed part of the vehicle structure, so as to fix a piston rod against movements along its longitudinal axis with respect to the fixed part of the vehicle structure, the servo cylinder being provided with second mounting means adapted for connecting the servo cylinder to a control rod of the gearbox of the vehicle to move the control rod.

A servo assisted actuating system usually comprises a control valve which is linked to a gear lever and a servo cylinder which may be a double-acting pneumatic cylinder with a piston which divides the cylinder interior into an outer and an inner chamber. When the gear lever makes a shift or select movement a link such as a cable transmits this movement to the control valve which in turn supplies pressurized fluid to the inner or outer chamber of the servo cylinder to cause the desired movement of the piston. The movement of the piston is usually transmitted via a piston rod which is directly or indirectly connected to a control rod of a gearbox. In most cases the servo cylinder is mounted in a fixed relation to the remaining vehicle structure, and the piston rod is moving with respect to the gearbox and the remaining vehicle structure. In order to perform a shift movement the control rod has to be rotated around its longitudinal axis, whereas for performing a select movement the control rod has to be moved along its axial direction. The present invention may be applied to both, namely servo assisted actuating systems for shift movements and servo assisted actuating systems for select movements. However, the more important field of application is servo assistance for performing the shift movement which generally requires more effort to be applied to the manual gear lever. In particular, in current utility vehicles, such as buses and trucks, the transmission or gearbox is mounted at a large distance from the driver seat. This distance is particularly large in vehicles with under-floor or rear-mounted engines. Due to the long distance and the sometimes stiffly moving shift linkage in mechanically shifted gearboxes, it is required for performing accurate gear shifts that the driver takes great care and exerts a high force to the gear lever for achieving the gear shift. In such environment the application of servo assisted actuating systems for multispeed gearboxes is an important support for the driver.

EP 0 251 807 B1 discloses a power-assisted gear-shift mechanism connected to a manual shift lever by two push-pull cables, with a cylinder casing, a valve, a piston and a piston rod and a first and second lateral shaft, wherein axial movement of the first shaft results in engagement of the shift-and-select lever and rotation of the second lateral shaft results in shifting the selected shift head. The rotation of the second lateral shaft is power assisted by the hydraulic piston-cylinder arrangement. Albeit one goal of disclosure EP 0 251 807 B1 is to limit the complexity and number of components of the construction, said cylinder casing is fixedly mounted on the upper part of a transmission housing thus being operable only if adapted to a specific transmission housing.

A servo assisted actuating system according to the preamble of claim 1 is known from JP 11351380 A. The servo cylinder and the control valve connected thereto are mounted to the control rod of the gearbox via an extension member such that the longitudinal axis of the servo cylinder is disposed at a distance to the longitudinal axis of the control rod in a plane perpendicular to the longitudinal axis of the control rod. The piston rod extending to the exterior of the servo cylinder is coupled by a linkage including two ball bearings to a fixed part of the vehicle structure. Since the piston rod is coupled to a fixed part, the piston rod itself is essentially fixed, and the movement caused by actuating the double-acting servo cylinder results in a movement of the cylinder. In this case the cylinder performs a pivoting or rocking movement around the longitudinal axis of the control rod at a constant distance to the longitudinal axis of a control rod. Of course, this movement is only about a very limited angular range around the longitudinal axis of the control rod. Because of this orbiting movement of the servo cylinder the piston rod can not be totally fixed with regard to the remaining structure of the vehicle but must follow the cylinder movement by performing a swiveling or rocking movement with respect to the fixation point. For this reason the piston rod is coupled by a bearing that allows a swiveling or rocking movement over a certain range. This prior art system has some disadvantages. For example it can not easily be adapted to different types of vehicles or different models within the same series of vehicles since its dimensions would have to be varied depending on the space available for its mounting and depending on where the piston rod can be coupled to a fixed part of the vehicle structure. Such geometrical conditions may be different in each type and each model of a vehicle, and thus would require that an adapted servo actuating system would have to be provided for each type and model. Another disadvantage is that this arrangement needs a relatively large installation space since the servo cylinder must be able to perform an orbiting movement around the longitudinal axis of the control rod over a predetermined angular range, i.e. over the entire movement range there has to be empty space in the vehicle to allow this movement of the servo cylinder.

It is the object of the present invention to provide an improved servo assisted actuating system for a multispeed gearbox of a vehicle which may be mounted in a vehicle in a very simple and flexible manner. In particular, it would be desirable to have the whole actuating system in a preassembled state which could then simply be mounted in the vehicle by very few mounting steps, and which could easily be mounted in different models and types of vehicles with minimal need for adaption to the particular vehicle.

These and other objects are solved in accordance with the invention by providing an actuating system as defined in claim 1. Preferred embodiments of the invention are set out in the dependent claims.

According to the present invention the system is arranged such that the cable is extending through a central through hole in the piston rod and in the piston into the inner chamber of the servo cylinder. In the inner chamber the cable is connected to an actuating arm which is extending to the outside of the servo cylinder to the control valve for actuating it. The cable is slideably received in the through hole so as to allow a certain longitudinal movement therein which is sufficient to effect the movement of the actuating arm for actuating the control valve to the desired operating states. Furthermore, sealing means are provided that ensure that the through hole with the cable received therein is properly sealed with respect to the inner and outer chamber of the servo cylinder. This means that the sealing means should prevent that pressure fluid from the inner chamber is leaking through the central through hole of the piston rod in which the cable is slideably received which means that the sealing means should prevent substantial leakage over a typical actuating time during which the servo assisted actuating system is operated to perform the servo assisted actuating movement.

In the above described manner a unique arrangement of the actuating system is achieved. In particular, the piston rod and the servo cylinder are oriented such that they form a linear arrangement with the push-pull cable, i.e. the cable, piston rod, piston and servo cylinder are coaxially disposed with respect to their common longitudinal axis, and thus in a sense piston rod, piston and servo cylinder form an extension of the cable. This arrangement allows to achieve several advantages. Whereas in the standard servo assisted actuation system there are separately mounted servo cylinders and push-pull cables which both need to be sealed and mounted individually, the present invention combines these elements to a preassembled servo assisted actuation system minimizing weaknesses such as:
- Moving parts that are exposed to the environment
- bearing contacts that will be exposed to load cycles
- external piping
- exposed dynamic seal areas.

The linear coaxial arrangement of cable, piston rod and servo cylinder further allows a very flexible installation of the system since servo cylinder can simply be mounted with its piston rod on the fixed part such that the servo cylinder with its second mounting means is in the correct position to operate the control rod. For each model or vehicle type it is sufficient to choose a proper mounting bracket which is fixed to the gearbox on the one hand and which provides for the desired positioning of the servo cylinder. Furthermore, because of the linear coaxial arrangement no torques are generated since all forces act along the straight line defined by the cable and the longitudinal axis of the piston rod and the servo cylinder.

A further advantage of the arrangement according to the invention is that it is the servo cylinder itself which is moving and which transfers its movement to the control rod of the gear box. The servo cylinder has a relatively high mass compared to the piston and piston rod which are in most prior art arrangement the moving parts whose movement is transferred to the control rod. In the arrangement according to the present invention the moving servo cylinder has sufficient mass and thus inertia which is desired to prevent vibrations and to improve the comfort for the driver. In prior art systems often inert masses were added which were moved by the moving piston and piston rod in order to give the moving parts sufficient mass for the above-mentioned purpose. Such extra inert masses are avoided in a system according to the present invention since the moving servo cylinder already has sufficient mass to achieve the desired effects.

The present invention may be realized with any kind of cable transmissions which are capable of transmitting lever movements from a vehicle cabin to a remote location in the vehicle. One type cable connection which is typically utilized for such purposes is a push-pull cable connection. In the following such push-pull cable is described in more detail, and the following description often reference is made to push-pull cables. This reference to push-pull cables should only be understood as a typical example, whereas the invention in general is applicable in connection with any cable connection. Push-pull cable connections normally have a conduit, normally made of flexible material such as plastic hose, which is fixed at one or more points with respect to the vehicle structure and a push-pull cable (sometimes also referred to as core) which is moveably received therein and which is driven by an actuator such as a manual gear lever to move back and forth with respect to the conduit. In a preferred embodiment the conduit is connected to the piston rod at its end so that the piston rod forms an extension of the conduit, and the push-pull cable extends from the conduit, through the piston rod and piston into the inner chamber of the servo cylinder. It should be noted that the wording that requires that the cable is extending through the piston rod and into the inner chamber does not require that the actual cable core is extending through the piston rod but is also including embodiments in which one or more cable extension members are connected to the actual cable core member so to follow its longitudinal movements. These cable extension members may for example be in the form of a rigid rod that is attached to the end of the actual cable core member and which then extends through the longitudinal through hole of the piston bore and into the inner chamber. The cable extension member in this arrangement is part of the push-pull cable.

It should also be noted that the cable could be connected in the inner chamber to more than one actuating arm in case more than one actuating arm is used to control the control valve.

The control valve can be integrated with the servo cylinder and the cable connection to a single preassembled unit which then can simply be mounted in the vehicle essentially by attaching the first and second mounting means which connect the piston rod to a fixed part of the vehicle structure (which can of course be via an intermediate mounting bracket) and by connecting the servo cylinder to the control rod in order to drive a desired control rod movement.

The cable end portion may be connected to the inner end of the actuating arm by a releasable coupling mechanism inside the inner chamber. The coupling mechanism may for example be adapted to be brought from an open to a closed position clamping the cable therein by moving the actuating arm along its longitudinal direction from a withdrawn to an operative position, thereby closing the coupling mechanism, and vice versa if the cable positioning is to be adjusted. In particular, by adapting the actuating arm and the coupling mechanism to cooperate such that the coupling mechanism is brought from an open state in which the end portion of the cable may be shifted therein to a closed state in which the end portion of the cable is clamped therein by moving the actuating in its longitudinal direction from a first to a second position and vice versa.

In addition, since the cable and the servo cylinder are aligned coaxially on a longitudinal line the operation of the system is essentially not altered in case of a pressure supply failure since the force can be exerted by the cable in the same manner because the cable and servo cylinder are disposed and act along the same line with the direction of the exerted force coinciding, except that a higher force has to be exerted on the push-pull cable in order to achieve the desired gear shift or select movement, if the servo assistance is out of operation.

In a preferred embodiment the servo assisted actuation system is further provided with an actuating or crank lever, wherein this lever is at one of its ends rotatably coupled to the servo cylinder and with its other end adapted to allow a fixed connection to the control rod of the gearbox to thereby effect a rotational movement of the control rod around its longitudinal axis for a gear shift. In this embodiment the first mounting means which couples the piston rod to the remaining fixed vehicle structure must be adapted to allow a swiveling movement of the piston rod such that the piston rod can follow the movement of the servo cylinder when this follows an angular movement around the longitudinal axis of the control rod. Since the required rotation of the control rod is over a rather limited angle only, the corresponding movement path of the opposite end of the crank lever is also only a limited sector of a circular path, and the corresponding swiveling movement of the piston rod is very limited, typically to a range of ± 4°. Such adaption of the first mounting means to allows swiveling or rocking movement of the piston rod is of course not necessary if the servo assisted actuation system is intended to perform a linear movement, for example if the servo cylinder should be driven to make a linear movement to be transferred to the longitudinal axis of the control rod in order to perform a select movement of the control rod.

In addition, the actuating system according to the present invention can be utilized with various crank lever designs, i.e. with crank levers of different lengths, allowing it to be adapted to different requirement on the torque exerted, without need to change anything in the servo assisted actuator according to the present invention.

In a preferred embodiment the first mounting means allowing for swiveling movement comprise a spherical bearing element through which the piston rod and the cable received therein extend. The spherical bearing element is seated in housing part having a complementary inner shape to the spherical bearing element and partially enclosing and thereby holding the spherical seating element, thereby allowing a rotational movement of the spherical element within the housing part but preventing a longitudinal movement along the longitudinal axis of the piston rod that is fixed against longitudinal movement which respect to the spherical bearing element. The housing part in turn is either directly mountable to a fixed member of the vehicle structure or via a mounting bracket or other intermediate members.

In a further preferred embodiment the actuating arm is extending from the inner chamber of the servo cylinder where it is connected to the cable through an opening in the servo cylinder and extends further to the interior of the control valve which is directly mounted to the surface of the servo cylinder. In the opening through which the actuating arm extends the actuation arm is seated such that it may perform a pivotal movement around the seating point. In this arrangement, a linear movement of the cable is translated to a corresponding linear movement at the other end of the actuating arm in the opposite direction, and if the lengths of the part of the actuating arm from the pivotal seating to the cable end and to the control valve end are the same, then the distance of linear movement of the actuating arm at the control valve end also is the same. The actuating arm is acting on the control valve in such a manner that a linear movement of its control valve end in one direction causes pressurized fluid to be supplied to the inner chamber, whereas a linear movement of its control valve end in the opposite direction causes pressurized fluid to be supplied to the outer chamber.

It should be noted that in the present application the term "actuating arm" is intended to refer to any member which is moved by the movement of the cable in some way, and is not restricted to a member which is mounted for pivotal movements. The actuating arm could also be an actuating member that performs linear movements in response to cable movements, i.e. the actuating arm is any actuating component that transfers movement of the cable to a movement of any control member in the control valve for controlling its operation.

The wording "a fixed part of the vehicle structure" refers to any part or member that is not moveable with respect to the frame and the chassis of the vehicle or to any part of the latter, or is moveable with respect thereto to a very limited extend only because it is mounted in the vehicle structure by flexible mounting or suspension means which allow for a certain oscillating movement of the component with respect to the vehicle structure. The first mounting means could for example be mounted directly or indirectly on the gearbox.

The invention will be described in more detail in connection with a preferred embodiment illustrated in the accompanying drawings in which:
Fig. 1 shows a cross-sectional view of a servo assisted actuating system in a cross-sectional view in a neutral operational state;
Fig. 2 shows a cross-sectional view of the servo assisted actuating system as in Fig. 1 with the servo actuating cylinder in a first operational state at the beginning of the motion of the servo cylinder;
Fig. 3 shows a cross-sectional view of the servo assisted actuating system as in Fig. 2 with the servo actuating cylinder in the first operational state at the end of the motion of the servo cylinder;
Fig. 4 shows a cross-sectional view of the servo assisted actuating system as in Fig. 1 with the servo actuating cylinder in a second operational state at the beginning of the motion of the servo cylinder;
Fig. 5 shows a cross-sectional view of the servo assisted actuating system as in Fig. 4 with the servo actuating cylinder in the second operational state at the end of the motion of the servo cylinder; and
Fig. 6 shows a schematical illustration of a servo assisted actuating system according to the present invention.

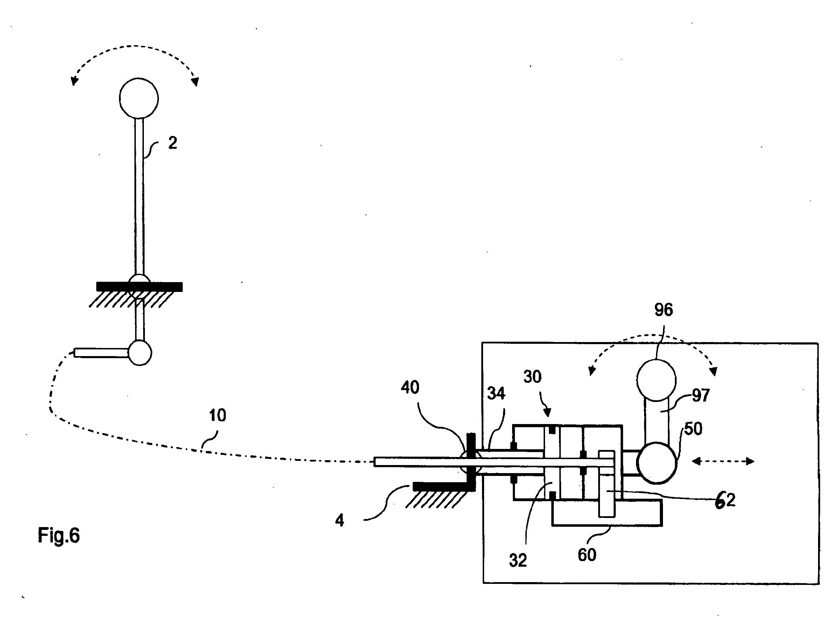

First a brief overview over the basic components and their relation in the system of the invention is given with reference to the schematical overview of Fig. 6. A gear lever 2 is pivotally mounted in the vehicle cabin, and movements of the gear lever 2 are transferred to movements of a cable connection 10. In this example a pivotal movement of the gear lever in the plane of the Fig. 6 is schematically indicated by an arrow which corresponds to a gear shift movement of the transmission. The invention is not limited to gear shift movements but can in principle also be applied for performing servo assisted gearbox operations, for example gear select movements, as will be explained in more detail below.

In the schematical illustration of Fig. 6 the cable connection 10 is shown in a simplified manner as a tube and its end portion and as a dashed-and-dotted line in the intermediate region between the end portions. The design of the cable connection 10 will be described in more detail below.

A servo cylinder 30 comprises a piston 32 which is slideably moveable therein. The piston 32 comprises a piston rod 34 which extends therefrom and to the outside of the servo cylinder housing. The piston rod is provided with first mounting means 40 by which it is mounted on a part which is fixed with respect to the vehicle structure, i.e. to any part or member that is not moveable with respect the frame and the chassis of the vehicle or is only moveable with respect thereto to very limited extent because it is mounted or suspended whith elastic mounting or suspension means which allow for certain vibrational movements with respect to the frame or chassis of the vehicle. The fixed part 4 of the vehicle structure could for example be a bracket which is in turn fixed on the gearbox housing.

The cable connection 10 is guided through a central through hole in the piston rod 34 and further through the piston 32 into an inner chamber of a servo cylinder 30. At the end of the cable in the servo cylinder the end portion of the push-pull cable is connected to an actuating arm 62 which is pivotally mounted therein and which transfers longitudinal movements of the push-pull cable to a control valve 60. Controlled by the position of the actuating arm 62 pressure fluid is selectively supplied by the control valve 60 to the servo cylinder 30 to move the piston 32 backward and forward, depending on the positioning of the actuating arm 62 determined by the push-pull cable. Since the piston rod 34 is mounted by first mounting means 40 to a fixed part 4 of the vehicle structure so as to fix the piston rod against movements along its longitudinal axis with respect to the vehicle structure, also the piston 32 remains fixed, and the selective operation of the control valve 60 leads to a corresponding movement of the servo cylinder 30 as a whole with respect to the fixed piston 32, i.e. the servo cylinder 30 is moving to the left hand side or right hand side relative to the fixed part 4 when the control valve 60 is operated. In this manner a relative movement of the piston 32 to the servo cylinder housing to the left hand side or to the right hand side, respectively, is caused. Since the piston 32 and piston rod 34 are mounted on the fixed part 4 this relative movement causes a corresponding horizontal movement of the servo cylinder housing 30.

The servo cylinder 30 is provided with second mounting means 50 which are adapted for connecting the servo cylinder to a control rod 96 of the gearbox. In the illustration of Fig. 6 the control rod 96 is a shaft extending perpendicular to the plane of the Figure. To this shaft 96 a crank lever 97 is fixed which extends to the second mounting means 50 and which is in engagement with the second mounting means 50 in order to transfer movement of a second mounting means 50 in the horizontal direction into a rotation of the shaft 96 around its longitudinal axis. The lever 97 is coupled to the second mounting means in a rotatable manner such that it is rotatably moveable with respect to the second mounting means 50 which allows to transmit a linear movement of a servo cylinder 30 into a rotational movement of the shaft 96 around its longitudinal axis. It will be explained in more detail below that the movement of the servo cylinder in this arrangement is not a linear movement in a strict sense but requires a certain swiveling movement of the servo cylinder with respect to the first mounting means 40 in order to allow the second mounting means 50 to follow a portion of an arc movement around the longitudinal axis of the shaft 96 which is rotated by the servo cylinder 30.

An alternative arrangement which would allow the crank lever 97 to perform a pivoting movement around the longitudinal axis of the control rod 96 while the servo cylinder 30 is connected to the opposite end of the crank lever 97 would be to provide a second mounting means which has an opening through which the pin connected to the crank lever may extend and in which this opening has a vertical extension such that the pin extending through the opening may move over a certain range in a direction perpendicular to the longitudinal axis of the servo cylinder. In this arrangement the accurate movement of the end of the crank lever 97 connected to the servo cylinder could be achieved while the servo cylinder itself performs a purely linear movement.

In principle the servo assisted actuating system illustrated could also be arranged such that it assists in performing select movements of the control rod 96 of the gearbox. Select movements are performed by moving the control rod 96 along its longitudinal axis. In such arrangement the servo cylinder may be disposed coaxially with respect to the control rod and act on one of its ends to thereby transmit linear movements of the servo cylinder to select movements of the control rod. In such an arrangement the first mounting means do not have to be adapted to allow a swiveling movement of the piston rod 32 with respect to the fixed part 4 of the vehicle structure but could be any mounting that maintains the fixed relation between the piston rod and the fixed part of the vehicle structure.

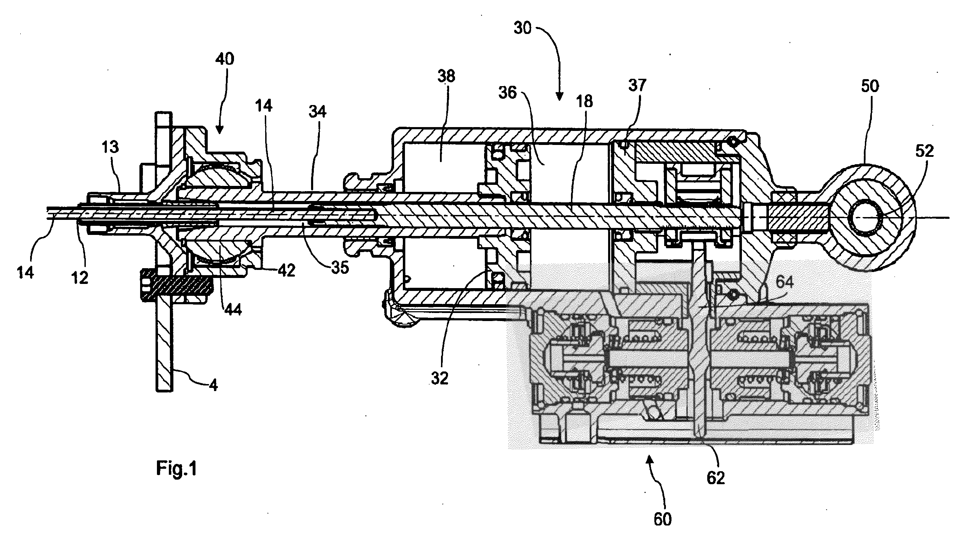

In the following one preferred embodiment of a servo assisted actuating system as schematically illustrated in Fig. 6 is described with reference to Figs. 1 to 5. Fig. 1 to 5 show cross-sectional views of a system according to the invention, namely an end portion of the cable connection opposite to the gear lever and the servo cylinder system. The control rod of the gearbox to which the movement of the servo cylinder is to be transferred as schematically indicated as 96 in Fig. 6 is not shown in Figs. 1 to 5.

The push-pull cable 14 (sometimes also referred to as cable core) is guided in a cable conduit 12 which is normally a tubular member or hose made of flexible plastic material. The cable conduit 12 is preventing buckling of the cable connection and protecting the push-pull cable. The conduit 12 is fixed to a fixed part of the vehicle structure in order to allow to transfer forces through the longitudinal movements of the push-pull cable 14 inside of the conduit 12. (Please note that in Fig. 1 to 5 the cable conduit 12 is shown over a very short distance only extending from a conduit extension body 13 and is then omitted in order to make the cable core 14 more clearly visible). However, actually the cable conduit 12 extends up to the opposite end portion of the push-pull cable and is there also connected to a fixed part of the vehicle structure. The push-pull cable and the conduit 12 are guided into through hole 35 in the piston rod 34 which extends coaxially to the piston rod 34 and extends therethrough. Inside the through hole 35 the cable core 14 is connected to a cable extension member 18 in the form of a rigid rod that extends the cable core 14 longitudinally but is part of the push-pull cable. This cable extension member 18 may have the form of a rigid rod that is slideably received in the central through hole 35 of the piston rod 34 and piston 32. This cable extension member 18 extends into an inner chamber 36 of the servo cylinder 30. Please note that in the illustrated embodiment the inner chamber 36 is further subdivided by a fixed piston member 37 which seals the portion of the inner chamber 36 into which pressure fluid is introduced against the portion in which the end portion of the cable is connected. This fixed piston member 37 also comprises a through hole which is disposed coaxially to the through hole of the piston 32 and the piston rod 34 and which slideably receives the push-pull cable guided therethrough.

Close to the inner end portion of the push-pull cable the push-pull cable is releasebly connected to an actuating arm 62 by a coupling mechanism, wherein this coupling mechanism provides an engagement between the inner end of the actuating arm 62 and the end portion of the push-pull cable. The actuating arm 62 is pivotally mounted, on a bearing portion 64 which is received in a complementary shaped bearing part which is formed in a hole in the outer wall of the servo cylinder such that the actuating arm 62 can pivot around its bearing portion 64 within the plane of Fig. 1 to 5. If should be noted again that this arrangement of the actuating arm to be pivotally moveable is only a preferred embodiment but that in general any kind of actuating arm could be used which is capable of transmitting a cable movement to any kind of actuating movement in the control valve to control it.

A longitudinal push movement of the push-pull cable further to the inside of the servo cylinder 30 thus causes a pivoting movement of the actuating arm 62 such that its inner end also moves further to the inside of the servo cylinder (to the right hand side in the Figs.).

On the other side, a longitudinal pull movement of the push-pull cable withdrawing a certain length portion of the push-pull cable from the servo cylinder 30 causes an oppositely directed pivoting movement of the actuating arm 62 such that its inner end moves in the direction towards the piston rod 24 (to the left hand side in the Figs.).

In Fig. 1 the push-pull cable 14 and the actuating arm 62 connected thereto are shown in a neutral or non-operative position. This means that the control valve 60 is set to a neutral state in which no pressurized fluid is supplied to the servo cylinder 30.

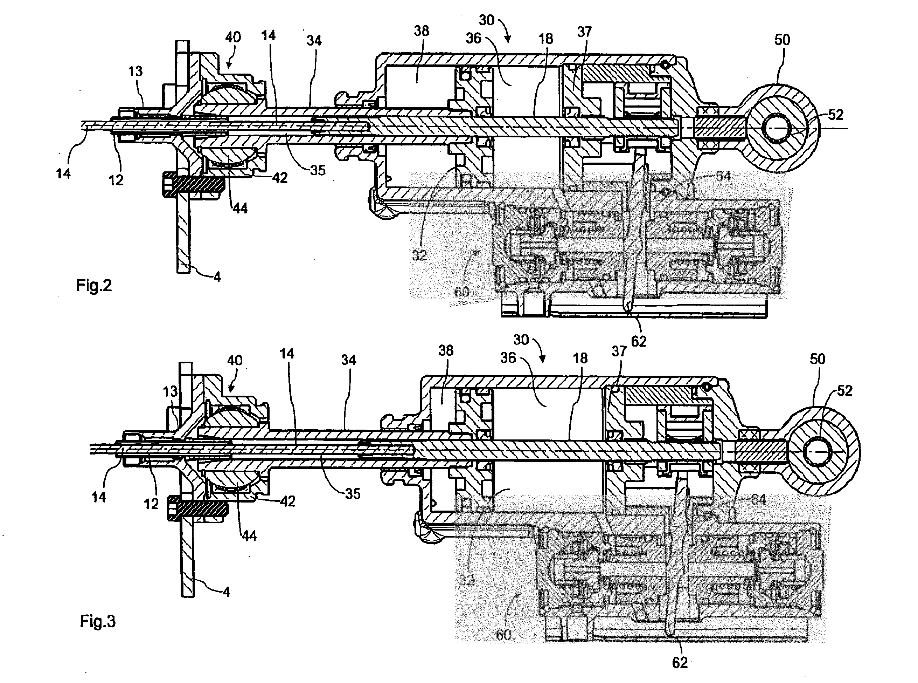

Fig. 2 and 3 show the control valve in a first operational state which is caused by a push movement of the push-pull cable 14 which leads to a pivoting movement of the actuating arm 62 such that the end portion of a actuating arm 62 extending into the control valve 60 is moved to the right hand side. This movement of the actuating arm 62 causes that a fluid flow passageway from a pressurized fluid as source (not shown) is opened such that pressurized fluid is supplied to the inner chamber 36 of the servo cylinder, more precisely to the part of the inner chamber 36 which is defined between piston 32 and fixed piston 37. In Fig. 2 the state of the servo cylinder right at the beginning of the opening of the fluid flow path to the inner chamber 36 is shown. The increased pressure in the inner chamber 36 causes a relative movement of the piston 32 and the servo cylinder 30 with respect to each other, i.e. the part of the inner chamber 36 which is supplied with pressurized fluid increases in volume by the relative movement of the piston 32 with respect to the servo cylinder 30. Since the piston 32 and the piston rod 34 are fixed with respect to the fixed part 4 of the vehicle structure the absolute position of the piston 32 and piston rod 34 in space remains unchanged, i.e. piston and piston rod remain in a fixed position with respect to the overall vehicle structure. In turn the servo cylinder 30 is moved in the opposite direction such that a relative movement of the piston 32 with respect to the servo cylinder 30 is achieved. The push movement of the push-pull cable thus leads to servo cylinder operation as indicated in the transition from Fig. 2 to 3, i.e. the servo cylinder 30 performs a horizontal movement to the right hand side. This horizontal movement or push movement of the servo cylinder 30 thus is a direct amplification of the push movement of the cable, i.e. in this arrangement according to the invention the servo cylinder 30 plays the role of a longitudinal extension of a push-pull cable itself, which extension in addition performs an amplification of the push-force on the push-pull cable. The resulting increased reaction force induced by the force amplification of the servo cylinder is absorbed by the fixed part 4 on which the piston rod is resting with its first mounting means 40.

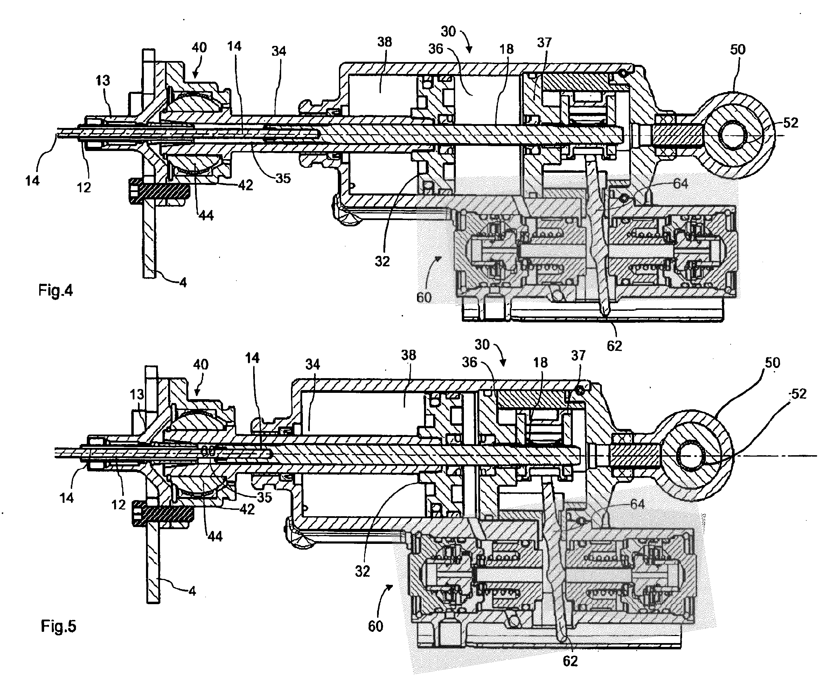

A pull movement of the push-pull cable and the following operation of the servo cylinder is illustrated in Fig. 4 and 5. If the push-pull cable underwent a pull movement from the neutral state shown in Fig. 1 to the state after the pull movement in Fig. 4, the push-pull cable made a slight movement with respect to a servo cylinder 30 which may be seen from a comparison of Fig. 1 and 4, i.e. in the state shown in Fig. 4 the cable extension member 18 of the push-pull cable is pulled over a certain distance out of the servo cylinder 30 or to the left hand side in Fig. 4 compared to Fig. 1. This cable movement and the resulting pivotal movement of the actuating arm 62 inside the control valley leads to a changed configuration of the fluid flow path from the pressurized fluid source to the servo cylinder which causes pressurized fluid to flow to the outer chamber 38 which in turn increase in volume. This transition which is illustrated in Fig. 4 and 5 results in a relative movement of the piston 32 with respect to the servo cylinder 30. Again, since the piston 32 and piston rod 34 are mounted on the fixed part 4 which is at rest with respect to the vehicle structure, the piston 32 and piston rod 34 also remain at rest. Consequently the relative movement of the piston 32 with respect to the servo cylinder 30 leads to a linear movement of the servo cylinder 30 in space. In case of the pull movement of the push-pull cable which leads to the operational states illustrated in Fig. 4 and 5 the servo cylinder 30 performs a pull movement to the left hand side in these Figs. 4 and 5. Also in this operation, the servo cylinder 30 may be viewed as an extension of the push-pull cable which in addition leads an amplification of the force which was exerted on the push-pull cable wherein the counter-directional reaction force of the amplified force is absorbed by the first mounting means 40 and the fixed part 4 on which the piston rod rests.

As shown in Fig. 1 to 5 the servo cylinder 30 is provided with second mounting means 50. In this embodiment this second mounting means 50 comprises an annual mounting body which is disposed at the front end and coaxially to the servo cylinder 30. The annular mounting body comprises a central hole 52. Through this hole 52 a pin connected to an end portion of a crank lever may extend in order to connect the crank lever (not shown) to the second mounting means 50. The other end of the crank lever is fixedly connected to the control rod of the gearbox. The crank lever may perform pivoting movements around the longitudinal axis of the control rod. If the servo cylinder is moving with respect to the fixed part 4 of the vehicle structure this leads to a pivotal movement of the crank lever and thus a rotational movement of the control rod of the gearbox. If the crank lever performs a pivotal movement around the longitudinal axis of the control rod, its opposite end connected to the servo cylinder 30 performs a movement which corresponds to a segment of a circle around the longitudinal axis of the control rod. Although the required movement range is rather limited, because the angular movements of the control rod to perform shift movements are rather small, and therefore the arc length of the movement of the second mounting means 50 on the circular segment is rather small, the movement of the servo cylinder cannot be a purely linear movement because the second mounting means 50 has to follow the arcuate path ofer a small segment of a circle. To allow that the second mounting means 50 follows this movement path it is preferred that the first mounting means 40 are adapted such that the piston rod 34 mounted therein may perform a swiveling movement with respect to the first mounting means 40.

In this embodiment the first mounting means 40 comprise a ball bearing element 44 which has a central bore in which the front end portion of the piston rod 34 is received. The front end portion of the piston rod 34 has an outer diameter which corresponds to the diameter of the bore of the bearing element 44 such that a tight fit between the front end portion of the piston rod 34 and the bearing element 40 is achieved. In order to prevent any longitudinal movements of the front end portion of the piston rod 34 in the bore of the ball bearing element 44, the piston rod 34 is provided with a circumferential shoulder located at a certain distance from the front end of the piston rod which is designed such that the ball bearing element 44 may abut against this circumferential shoulder when the piston rod 34 is inserted into the bore of the bore bearing element 44. The circumferential shoulder is located such that the front end of the piston rod is extending beyond the bore and projecting from the ball bearing element 44 which allows to mount a further securing element on the outer surface of the piston rod which abuts against the ball bearing element 44 on the side opposite to the circumferential shoulder. In this way any movements of the piston rod within the bore of the ball bearing element 44 is prevented. The bore bearing element 44 is held in place by a case 42.

The cable conduit 12 of the cable connection is provided at the end to be mounted in the fixed part 4 with a conduit extension body 13 which has a cylindrical section surrounding the cable conduit 12 and fixed to it, a flaring or funnel-shaped section and a following ring-shaped section adapted to rest on a surface of the fixed part 4. On the opposite side of the ring-shaped section of the conduit extension body 13 the case 42 rests. The conduit extension body 13 and the case 42 are held in place and fixed on the fixed part 4 by means of a screw or bolt which extends through the fixed part, the ring-shaped section of the conduit extension body 13 and through a portion of the case 42. In this manner the ball bearing element 44 is held in place within the case 42 on the fixed part 4, wherein the ball bearing element 44 may perform rotational movements within the case 44 and is thus allowing a certain rocking or swiveling movement of the piston rod 34, wherein the range of this rocking movements is of course limited by the size of the opening of the case 42 through which the piston rod 34 extends towards the servo cylinder 30.

## Claims

1. Servo assisted actuating system for a multispeed gearbox of a vehicle, comprising a cable connection (10) including a cable (14), a servo cylinder (30), a piston (32) slidably disposed in the interior of the servo cylinder and dividing the interior into an inner (36) and an outer chamber (38), a piston rod (34) connected to the piston and extending through the outer chamber and to the exterior of the servo cylinder, and a control valve (60) to be connected to a pressure fluid source, one end of the cable being connectable to a gear lever (2) and the other end being connected to the control valve (60) to control it to selectively supply pressurized fluid to the inner or outer chamber of the servo cylinder, the piston rod (34) being provided with first mounting means (40) adapted to be mountable to a fixed part (4) of the vehicle structure so as to fix the piston rod (34) against movements along its longitudinal axis with respect to the fixed part of the vehicle structure, the servo cylinder being provided with second mounting means (50) adapted for connecting the servo cylinder to a control rod (96) of the gearbox of the vehicle to move the control rod, **characterized in that** the cable is extending through a central through hole (35) longitudinally extending through the piston rod and the piston into the inner chamber (36) of the servo cylinder where the cable is connected to an actuating arm (62) which is adapted to transfer longitudinal movements of the cable (14) to the control valve for actuating it, wherein the cable is slideably received in the through hole and sealing means are provided for sealing the through hole (35) with the cable received therein to prevent leakage of pressure fluid from the servo cylinder therethrough.

2. Servo assisted actuating system according to claim 1, **characterized in that** the control valve (60) is integrated with the servo cylinder (30) and the cable connection (10) into a single preassembled unit.

3. Servo assisted actuating system according to one of the preceding claims, **characterized in that** a crank lever (97) is provided which is with one of its ends rotatably connected to the second mounting means (50) and that is, with its opposite end, fixedly connectable to a control rod (6) of the gearbox such that a rotational movement of the control rod (96) may be effected by actuating the servo cylinder (30) for performing gear shift movements, and wherein the first mounting means (40) is adapted such that it allows a swiveling movement of the piston rod (34) when the first mounting means (40) is mounted to a fixed part (4) of the vehicle structure.

4. Servo assisted actuating system according to claim 3, **characterized in that** the first mounting means (40) allowing for a swiveling movement comprises a ball bearing element (44) through which the piston rod (34) and the cable received therein extend, the ball bearing element (40) being seated in a housing case (42) having a complementary inner shape and partially enclosing and thereby holding the ball bearing element (44), the housing case (42) being mountable directly or via intermediate mounting members on a fixed part (4) of the vehicle structure.

5. Servo assisted actuating system according to any of the preceding claims, **characterized in that** the actuating arm (62) is extending from the inner chamber (36) of the servo cylinder (30) where it is connected to the cable (14, 18) through an opening in the servo cylinder and is extending further to the interior of the control valve, the actuating arm (62) being seated in a bearing of the servo cylinder such that it may perform a pivotal movement in its bearing to thereby transmit a movement of its end connected to the cable (14, 18) to a movement of its other end in the opposite direction to actuate a control element of the control valve (60).

6. Servo assisted actuating system according to any of the preceding claims, **characterized in that** the cable (14) is at its end connected to the actuating arm (62) provided with a cable core extension member (18) in the form of a rigid rod which is extending through the central through hole (35) through the piston rod (34) and piston (32) and which is at its end opposite to the end connected to the actuating arm (62) connected to the cable (14).

7. Servo assisted actuating system according to any of the preceding claims, **characterized in that** a coupling mechanism disposed in the inner chamber for coupling an end portion of the cable (14) to the inner end of the actuating arm (62) and that the actuating arm and the coupling mechanism are adapted to cooperate such that the coupling mechanism is brought from an open state in which the end portion of the cable may be shifted therein to a closed state in which the end portion of the cable is clamped therein by moving the actuating arm in its longitudinal direction from a first to a second position and vice versa.

## Patentansprüche

1. Servounterstütztes Betätigungssystem für ein mehrstufiges Getriebe eines Fahrzeugs, mit einer Seilzugverbindung (10) einschließlich eines Seilzugs (14), einem Servozylinder (30), einem Kolben (32), der gleitfähig im Inneren des Servozylinders angeordnet ist und das Innere in eine innere Kammer (36) und eine äußere Kammer (38) unterteilt, einer Kolbenstange (34), die mit dem Kolben verbunden ist und durch die äußere Kammer und in den Außenraum des Servozylinders verläuft, und einem Steuerventil (60), das mit einer Druckfluidquelle verbindbar ist, wobei ein Ende des Seilzugs mit einem Schalthebel (2) verbindbar ist und das andere mit dem Steuerventil (60) verbunden ist, um es zu steuern, um selektiv Druckfluid in die innere oder äußere Kammer des Servozylinders einzuführen, wobei die Kolbenstange (34) mit einer ersten Montageeinrichtung (40) versehen ist, die dazu ausgestaltet ist, um an einem feststehenden Teil (4) einer Fahrzeugstruktur angebracht zu werden, um so die Kolbenstange (34) gegen Bewegungen entlang seiner Längsachse in Bezug auf das feststehende Teil der Fahrzeugstruktur zu fixieren, wobei der Servozylinder mit einer zweiten Montageeinrichtung (50) versehen ist, die dazu ausgestaltet ist, um den Servozylinder mit einer Steuerstange (96) des Getriebes des Fahrzeugs zu verbinden, um die Steuerstange zu bewegen, **dadurch gekennzeichnet, dass** der Seilzug durch eine zentrale Durchgangsöffnung (35), die sich in Längsrichtung durch die Kolbenstange erstreckt, und durch den Kolben in die innere Kammer (36) des Servozylinders verläuft, wo der Seilzug mit einem Betätigungsarm (62) verbunden ist, der dazu ausgestaltet ist, um Längsbewegungen des Seilzugs (14) auf das Steuerventil zu übertragen, um es zu betätigen, wobei der Seilzug gleitfähig in der Durchgangsöffnung angeordnet ist und Dichtungseinrichtungen vorgesehen sind, um die Durchgangsöffnung (35) mit dem darin aufgenommenen Seilzug abzudichten, um dort hindurchgehende Leckage von Druckfluid aus dem Servozylinder zu verhindern.

2. Servounterstütztes Betätigungssystem nach Anspruch 1, **dadurch gekennzeichnet, dass** das Steuerventil (16) mit dem Servozylinder (30) und der Seilzugverbindung (10) in eine einzelne, vorab zusammengesetzte Einheit integriert ist.

3. Servounterstütztes Betätigungssystem nach einem der vorhergehenden Ansprüche, **dadurch gekennzeichnet, dass** eine Kurbel (97) vorgesehen ist, die mit einem ihrer Enden drehbar mit der zweiten Montageeinrichtung (50) verbunden ist und die mit ihrem gegenüberliegenden Ende fest mit einer Steuerstange (6) des Getriebes verbindbar ist, so dass eine Drehbewegung der Steuerstange (96) bewirkt werden kann, indem der Servozylinder (30) betätigt wird, um Schaltbewegungen auszuführen, und wobei die erste Montageeinrichtung (40) dazu ausgestaltet ist, dass sie eine Schwenkbewegung der Kolbenstange (34) erlaubt, wenn die erste Montageeinrichtung (40) an einem feststehenden Teil (4) der Fahrzeugstruktur angebracht wird.

4. Servounterstütztes Betätigungssystem nach Anspruch 3, **dadurch gekennzeichnet, dass** die erste Montageeinrichtung (40), die eine Schwenkbewegung ermöglicht, ein Kugellagerelement (44) aufweist, durch das die Kolbenstange (34) und der darin aufgenommene Seilzug verlaufen, wobei das Kugellagerelement (40) in einer Gehäuseschale (42) gelagert ist, die eine komplementäre innere Form hat und das Kugellagerelement (44) teilweise umgibt und dadurch hält, wobei die Gehäuseschale (42) direkt oder über dazwischenliegende Montageteile an einem feststehenden Teil (4) der Fahrzeugstruktur anbringbar ist.

5. Servounterstütztes Betätigungssystem nach einem der vorhergehenden Ansprüche, **dadurch gekennzeichnet, dass** der Betätigungsarm (62) von der inneren Kammer (36) des Servozylinders (30), wo er mit dem Seilzug (14, 18) verbunden ist, durch eine Öffnung in dem Servozylinder verläuft und weiter in das Innere des Steuerventils verläuft, wobei der Betätigungsarm (62) in einem Lager des Servozylinders gelagert ist, so dass er eine Schwenkbewegung in seinem Lager ausführen kann, um dadurch eine Bewegung seines mit dem Seilzug (14, 18) verbundenen Endes in eine Bewegung seines anderen Endes in die entgegengesetzte Richtung zu übertragen, um ein Steuerelement des Steuerventils (60) zu betätigen.

6. Servounterstütztes Betätigungssystem nach einem der vorhergehenden Ansprüche, **dadurch gekennzeichnet, dass** der Seilzug (14) an seinem mit dem Betätigungsarm (62) verbundenen Ende mit einem Seilzugkern-Fortsatzteil (18) in Form eines festen Stabes versehen ist, der durch die zentrale Durchgangsöffnung (35) durch die Kolbenstange (34) und den Kolben (32) verläuft und der an seinem dem mit dem Betätigungsarm (62) verbundenen Ende gegenüberliegenden Ende mit dem Seilzug (14) verbunden ist.

7. Servounterstütztes Betätigungssystem nach einem der vorhergehenden Ansprüche, **dadurch gekennzeichnet, dass** ein Kopplungsmechanismus in der inneren Kammer angeordnet ist, um einen Endbereich des Seilzugs (14) mit dem inneren Ende des Betätigungsarms (62) zu koppeln, und dass der Betätigungsarm und der Kopplungsmechanismus dazu ausgestaltet sind zusammenzuwirken, so dass der Kopplungsmechanismus aus einer offenen Stellung, in der der Endbereich des Seilzug darin verschoben werden kann, in eine geschlossene Stellung gebracht werden kann, in der der Endbereich des Seilzug darin eingeklemmt ist, indem der Betätigungsarm in seiner Längsrichtung aus einer ersten und eine zweite Stellung und umgekehrt bewegt wird.

## Revendications

1. Système d'actionnement servo-assisté pour une boîte de vitesses à rapports multiples d'un véhicule, comprenant un moyen de raccordement par câble (10) incluant un câble (14), un servocylindre (30), un piston (32) disposé à coulissement à l'intérieur du servocylindre et séparant l'intérieur en une chambre intérieure (36) et une chambre extérieure (38), une tige de piston (34) raccordée au piston et s'étendant à travers la chambre extérieure et jusqu'à l'extérieur du servocylindre, et une soupape de commande (60) destinée à être raccordée à une source de fluide sous pression, une extrémité du câble pouvant être raccordée à un levier de vitesses (2) et l'autre extrémité étant raccordée à la soupape de commande (60) afin de la commander de telle sorte qu'elle alimente de manière sélective la chambre intérieure ou extérieure du servocylindre en fluide sous pression, la tige de piston (34) étant dotée d'un premier moyen de montage (40) conçu pour pouvoir être monté sur une partie fixe (4) d'une structure de véhicule de façon à fixer la tige de piston (34) afin qu'elle ne puisse effectuer aucun mouvement le long de son axe longitudinal par rapport à la partie fixe de la structure de véhicule, le servocylindre étant doté d'un deuxième moyen de montage (50) conçu pour raccorder le servocylindre à une bielle de commande (96) de la boîte de vitesses du véhicule en vue du déplacement de la bielle de commande, **caractérisé en ce que** le câble s'étend à travers un trou traversant central (35) s'étendant longitudinalement à travers la tige de piston et le piston jusque dans la chambre intérieure (36) du servocylindre où le câble est raccordé à un bras d'actionnement (62) qui est conçu pour transmettre des mouvements longitudinaux du câble (14) à la soupape de commande afin de l'actionner, le câble étant reçu à coulissement dans le trou traversant et des moyens d'étanchéité étant prévus afin d'assurer l'étanchéité du trou traversant (35) tandis que le câble est reçu dans celui-ci de façon à éviter que le fluide sous pression ne s'échappe du servocylindre par ledit trou.

2. Système d'actionnement servo-assisté selon la revendication 1, **caractérisé en ce que** la soupape de commande (60) est intégrée au servocylindre (30) et au moyen de raccordement par câble (10) au sein d'une unité unique pré-assemblée.

3. Système d'actionnement servo-assisté selon l'une des revendications précédentes, **caractérisé en ce qu'**une manivelle (97) est prévue, celle-ci étant raccordée à rotation, à l'une de ses extrémités, au deuxième moyen de montage (50) et pouvant être raccordée de manière fixe, à son extrémité opposée, à une bielle de commande (96) de la boîte de vitesses de telle sorte qu'un mouvement de rotation de la bielle de commande (96) puisse être produit par l'actionnement du servocylindre (30) de façon à réaliser des mouvements de changement de vitesse, et le premier moyen de montage (40) étant conçu de telle sorte qu'il permette un mouvement de pivotement de la tige de piston (34) lorsque le premier moyen de montage (40) est monté sur une partie fixe (4) de la structure de véhicule.

4. Système d'actionnement servo-assisté selon la revendication 3, **caractérisé en ce que** le premier moyen de montage (40) permettant un mouvement de pivotement comprend un élément formant roulement à billes (44) à travers lequel s'étendent la tige de piston (34) et le câble reçu dans celle-ci, l'élément formant roulement à billes (44) étant supporté dans un boîtier formant logement (42) présentant une forme intérieure complémentaire et entourant partiellement et par là même maintenant l'élément formant roulement à billes (44), le boîtier formant logement (42) pouvant être monté directement ou par le biais d'organes de montage intermédiaires sur une partie fixe (4) de la structure de véhicule.

5. Système d'actionnement servo-assisté selon l'une quelconque des revendications précédentes, **caractérisé en ce que** le bras d'actionnement (62) s'étend de la chambre intérieure (36) du servocylindre (30) où il est raccordé au câble (14, 18) à travers une ouverture dans le servocylindre et s'étend encore jusqu'à l'intérieur de la soupape de commande, le bras d'actionnement (62) étant supporté dans un palier du servocylindre de telle sorte qu'il puisse réaliser un mouvement de pivotement dans son palier afin de transformer ainsi un mouvement de son extrémité raccordée au câble (14, 18) en un mouvement de son autre extrémité dans la direction opposée afin d'actionner un élément de commande de la soupape de commande (60).

6. Système d'actionnement servo-assisté selon l'une quelconque des revendications précédentes, **caractérisé en ce que** le câble (14) est doté, à son extrémité raccordée au bras d'actionnement (62), d'un organe de prolongement d'âme de câble (18) sous la forme d'une tige rigide qui s'étend à travers le trou traversant central (35) à travers la tige de piston (34) et le piston (32) et qui est raccordé, à son extrémité opposée à l'extrémité raccordée au bras d'actionnement (62), au câble (14).

7. Système d'actionnement servo-assisté selon l'une quelconque des revendications précédentes, **caractérisé en ce qu'**un mécanisme d'accouplement est disposé dans la chambre intérieure en vue de l'accouplement d'une partie d'extrémité du câble (14) à l'extrémité intérieure du bras d'actionnement (62) et **en ce que** le bras d'actionnement et le mécanisme d'accouplement sont conçus pour coopérer de telle sorte que le mécanisme d'accouplement est amené à passer d'un état ouvert dans lequel la partie d'extrémité du câble peut être déplacée dans celui-ci à un état fermé dans lequel la partie d'extrémité du câble est serrée dans celui-ci en déplaçant le bras d'actionnement dans sa direction longitudinale d'une première à une deuxième position et inversement.
